# EUROPÄISCHE PATENTANMELDUNG

(11) **EP 1 752 619 A2**
(43) Veröffentlichungstag der Anmeldung: **14.02.2007**
(21) Anmeldenummer: 06112601.7
(22) Anmeldetag: 13.04.2006
(51) Int. Cl.: F01K 23/10, F02C 7/26

(54) **Turbogruppe mit Anfahrvorrichtung**

(30) Priorität: 18.04.2005 CH 6892005
(71) Anmelder: Alstom Technology Ltd, 5400 Baden (CH)
(72) Erfinder: Althaus, Rolf, 8704, Herrliberg (CH)

(57) **Zusammenfassung**

Die Erfindung betrifft eine Turbogruppe (100) mit Anfahrvorrichtung (120). Die Turbogruppe umfasst einen Verdichter (102), eine Brennkammer (103) und eine Turbine (104) sowie einen Generator-Motor (108), der mit der Turbine (104) antriebsverbunden ist. Die Anfahrvorrichtung (120) dient zum Anfahren der Turbogruppe und umfasst einen Dampferzeuger (121) zur Erzeugung von unter Überdruck stehendem Dampf, eine Dampfturbine (129) sowie einen Hilfsgenerator (130). Der Dampferzeuger (121) und die Dampfturbine (129) sind über eine erste Zuführleitung (125a) zur Zuführung von in dem Dampferzeuger (121) erzeugten Dampf zu der Dampfturbine (129) miteinander verbunden. Der Hilfsgenerator (130) ist einerseits mit der Dampfturbine (129) antriebsverbunden und ist andererseits zur Übertragung von elektrischer Leistung von dem Hilfsgenerator (130) auf den Generator-Motor (108) mit dem Generator-Motor (108) elektrisch verbunden. Ferner betrifft die Erfindung ein Verfahren zum Anfahren der Turbogruppe. Das Verfahren umfasst, unter Überdruck stehenden Dampf zu erzeugen, den Dampf unter Erzeugung elektrischer Leistung wenigstens teilzuentspannen und die Turbogruppe mittels der elektrischen Leistung elektromotorisch anzufahren.

## Beschreibung

### Technisches Gebiet

Die Erfindung betrifft eine Turbogruppe mit Anfahrvorrichtung zum Anfahren der Turbogruppe. Ferner betrifft die Erfindung ein Verfahren zum Anfahren der Turbogruppe.

### Stand der Technik

Aus dem Stand der Technik sind mehrere Verfahren und Vorrichtungen zum Anfahren von Turbogruppen, wie beispielsweise mobilen oder stationären Gas- oder Dampfturbinenanlagen oder anderweitigen Turbogruppen, bekannt. Insbesondere bei Anlagen, die stationär zur Stromerzeugung betrieben werden, stellt das Anfahren der Turbogruppe aufgrund der hohen Leistungen der Turbogruppe verbunden mit den in der Regel sehr hohen Rotormassen hohe Anforderungen an die Anfahrvorrichtung und die Regelung des Anfahrvorgangs.

Zum Starten einer Gasturbinenanlage kann beispielsweise ein Elektromotor eingesetzt werden, der dann zum Starten der Anlage mit der Welle des Verdichters verbunden sein muss, um so den Verdichter elektromotorisch anzutreiben. Häufig wird hierzu der Generator als Elektromotor genutzt. Der Generator ist über eine Welle mit der Turbine der Gasturbinenanlage und die Turbine wiederum über dieselbe oder eine weitere Welle mit dem Verdichter verbunden. Zum Anfahren der Anlage wird der Generator über einen statischen Frequenzumrichter, der mit elektrischer Leistung aus dem Netz gespeist wird, angesteuert und fungiert somit als Elektromotor.

In vielen Fällen ist es jedoch kostengünstiger kostengünstiger, die Gasturbinenanlage mittels Drucklufteinblasung zu starten. Die hierzu benötigte Druckluft entstammt einem Reservoir, das zuvor durch einen zusätzlichen Kompressor oder durch ein Abzweigen von Druckluft bei hochgelaufener Anlage gefüllt wurde.

Ein solches Anfahren einer Gasturbinenanlage mittels Drucklufteinblasung aus einem Luftspeicher ist beispielsweise aus der Patentschrift US 4 033 114 bekannt. Bei der hier beschriebenen Gasturbinenanlage sind die Wellen einer Hochdruckturbine mit vorgeschalteter Hochdruckbrennkammer und einer Niederdruckturbine mit vorgeschalteter Niederdruckbrennkammer miteinander verbunden. Ferner wird die Verbrennungsluft vom Luftspeicher der Hochdruckbrennkammer zugeführt. Das Verfahren zum Anfahren der Gasturbinenanlage umfasst hierbei die folgenden Verfahrensschritte: Zunächst wird die Gasturbine mit Luft aus dem Luftspeicher bis zur Erreichung der Betriebsdrehzahl beaufschlagt. Während des Hochfahrens der Gasturbine wird die Hochdruckbrennkammer gezündet, wobei die Eintrittstemperatur in den Hochdruckteil der Gasturbine auf einem Minimalwert gehalten wird. Anschließend wird bei Belastung der Gasturbine die Niederdruckbrennkammer gezündet und der Druck vor der Hochdruckturbine bis zum vollen Betriebsdruck erhöht. Hierbei ist die die Hoch- und Niederdruck-Turbine durchströmende Luftmenge höher als im Dauerbetrieb. Danach wird die Eintrittstemperatur vor dem Niederdruckteil der Gasturbine soweit erhöht, bis die volle Leistung der Gasturbine erreicht wird, um anschließend die Eintrittstemperatur vor dem Hochdruckteil der Gasturbine vom Minimalwert linear auf die volle Betriebstemperatur zu steigern. Gleichzeitig mit dem Steigern der Eintrittstemperatur in den Hochdruckteil wird die Eintrittstemperatur in den Niederdruckteil derart gesteigert, dass die Leistung der Gasturbine konstant bleibt und der Luftdurchsatz auf Normalwert reduziert wird.

Auch in der Patentschrift US 3 704 586 ist eine Anfahrschaltung für eine Gasturbinenanlage offenbart. Die Gasturbinenanlage umfasst hier einen Kohle-Druckvergaser, eine Entspannungsturbine mit Hochdruckverdichter und zugeordnetem Motor-Generator, einen Kessel mit angeschlossener Gasturbine und daran angekuppeltem Niederdruckverdichter sowie einen Anfahrmotor. Dem Druckvergaser ist ein Anfahr-Druckluftspeicher zugeordnet, wobei der Anfahr-Druckluftspeicher an den Hochdruckverdichter angeschlossen ist und durch einen Teilstrom der erzeugten Druckluft aufgeladen wird. Der Anfahr-Druckluftspeicher ist hierbei so bemessen, dass die hierin gespeicherte Druckluft genügt, um beim Anfahren der Anlage eine Mindest-Anzahl von Druckvergaseraggregaten mittels Druckluft aus dem Druckluftspeicher zu starten. Hierdurch lassen sich die zusätzlich vom Motor-Generator motorisch angetriebene Turbine und die zunächst vom Anfahrmotor angetriebene Gasturbine so weit auf Leistung bringen, dass letztlich die Gesamtanlage zunächst im Leerlauf eigenständig betrieben werden kann.

Nachteilig an der Lösung, eine Gasturbinenanlage mittels Drucklufteinblasung zu starten, ist jedoch, dass ein verhältnismäßig großes Reservoir zur Verfügung stehen muss, um hinreichend Druckluft speichern zu können. Insbesondere bei großen stationären Gasturbinenanlagen kann dies nur über sehr große Speichervolumina realisiert werden, die im Bau verhältnismäßig hohe Kosten verursachen. Auch muss nach einem Startvorgang der Anlage das Reservoir zunächst wieder aufgefüllt werden, bevor ein erneuter Startvorgang durchgeführt werden kann. Wird beispielsweise ein Startvorgang der Anlage im Erstversuch abgebrochen, so kann üblicherweise ein zweiter Startversuch nicht unmittelbar im Anschluss daran vorgenommen werden. Insbesondere für diesen Fall des Startabbruchs muss die Anlage zusätzlich noch mit einem weiteren Kompressor ausgestattet sein, um das Reservoir mit Hilfe des Kompressors wieder befüllen zu können.

### Darstellung der Erfindung

Hier will die Erfindung Abhilfe schaffen. Der Erfindung liegt somit die Aufgabe zugrunde, eine Turbogruppe mit Anfahrvorrichtung der eingangs genannten Art anzugeben, mit der die Nachteile des Standes der Technik vermindert oder vermieden werden. Des Weiteren soll durch die Erfindung ein Verfahren zum Anfahren einer solchen Turbogruppe zur Verfügung gestellt werden.
Die Erfindung trägt insbesondere dazu bei, eine Anfahrvorrichtung zur Verfügung zu stellen, die bei hoher Antriebsleistung dennoch einen nur verhältnismäßig geringen Raumbedarf aufweist. Weiterhin soll die Turbogruppe mit Hilfe der Anfahrvorrichtung ohne eine Anbindung an eine externe Stromversorgung angefahren werden können.

Diese Aufgabe wird erfindungsgemäß durch die Turbogruppe mit Anfahrvorrichtung gemäss Anspruch 1 sowie das Verfahren gemäss dem unabhängigen Verfahrensanspruch gelöst. Weitere vorteilhafte Ausgestaltungen der Erfindung finden sich in den Unteransprüchen.

Gemäß der Erfindung umfasst die Turbogruppe einen Verdichter, eine Brennkammer eine Turbine sowie einen Generator-Motor. Verdichter, Brennkammer und Turbine sind entlang eines Strömungspfades der Strömung der Turbogruppe angeordnet. Der Generator-Motor ist mit der Turbine antriebsverbunden. Zum Zwecke des Anfahrens der Turbogruppe ist der Turbogruppe des Weiteren eine Anfahrvorrichtung beigeordnet. Die Anfahrvorrichtung umfasst einen Dampferzeuger zur Erzeugung von unter Überdruck stehendem Dampf, eine Dampfturbine sowie einen Hilfsgenerator. Der Dampferzeuger und die Dampfturbine sind über eine erste Zuführleitung miteinander verbunden. Über die erste Zuführleitung wird in dem Dampferzeuger erzeugter Dampf der Dampfturbine zugeführt. Der Hilfsgenerator ist einerseits mit der Dampfturbine antriebsverbunden und ist andererseits zur Übertragung von elektrischer Leistung von dem Hilfsgenerator auf den Generator-Motor mit dem Generator-Motor elektrisch verbunden.
Zum Anfahren der Turbogruppe wird in dem Dampferzeuger unter Überdruck stehender Dampf erzeugt, der dann über die erste Zuführleitung der Dampfturbine zugeführt wird. In der Dampfturbine entspannt der Dampf sodann zumindest teilweise, wodurch die Dampfturbine angetrieben wird, die wiederum den Hilfsgenerator antreibt. Der angetriebene Hilfsgenerator erzeugt elektrische Leistung, die über die elektrische Verbindung auf den Generator-Motor übertragen wird.

Während des Anfahrvorgangs der Turbogruppe wird der Generator-Motor als Elektromotor betrieben. Demzufolge wird die Turbine mittels der von dem Hilfsgenerator gelieferten elektrischen Leistung von dem Generator-Motor angetrieben.
Die Turbogruppe wird somit mittels des Generator-Motors in einer ähnlichen Weise wie aus dem Stand der Technik bekannt angefahren. Im Vergleich zu den aus dem Stand der Technik bekannten Lösungen benötigt der Generator-Motor jedoch keine Energieversorgung aus einem externen Stromnetz. Die Turbogruppe mit Anfahrvorrichtung gemäß der Erfindung kann autark angefahren werden. Dies ist insbesondere für Anlagen, die fernab einer externen Stromversorgung betrieben werden, ein entscheidender Vorteil.
Der für den Anfahrvorgang erforderliche Dampf wird zum Zeitpunkt des Anfahrens oder unmittelbar davor in dem Dampferzeuger erzeugt. Im Vergleich zu einer Nutzung von verdichteter Luft, beispielsweise zur Einblasung der verdichteten Luft stromauf der Turbine, bietet die Nutzung von Dampf den Vorteil, dass keine Speicherung des zuzuführenden Dampfes in gasförmigem Aggregatzustand erforderlich ist. Vor der Verdampfung liegt der Dampf in flüssigem Aggregatzustand vor und erfordert somit ein nur geringes Speichervolumen. Ferner lässt sich mittels eines oder auch mehrerer Dampferzeuger zum Zeitpunkt des Anfahrens der Turbogruppe Dampf in hinreichender Menge erzeugen, um auch große stationär betriebene Turbogruppen, beispielsweise stationär zur Stromerzeugung betriebene Gas- oder Dampfturbinenanlagen oder auch Kombianlagen, anfahren zu können. Weiterhin ist es möglich, die Speichervolumina für die Speicherung des in flüssigem Aggregatzustand zu speichernden, für die Dampferzeugung benötigten Ausgangsfluids ohne große bauliche Anforderungen auch hinreichend groß auszuführen, um ein mehrfaches Wiederholen des Startvorgangs in kurzen Zeitabständen zueinander zu ermöglichen.
Ein bedeutender Vorteil der erfindungsgemäßen Lösung besteht darin, dass auch Altanlagen in einfacher Wiese ohne großen apparativen Aufwand mit einer erfindungsgemäß ausgebildeten Anfahrvorrichtung nachgerüstet werden können.

Der Ablauf des Anfahrvorgangs der Turbogruppe entspricht dann im Weiteren den aus dem Stand der Technik bekannten Anfahrvorgängen von Turbogruppen. Demzufolge wird die Turbogruppe üblicherweise auf eine Mindestdrehzahl hochgefahren, bei der die Brennkammer gezündet werden kann und von der aus die Turbogruppe dann aus eigener Kraft weiter hochdrehen kann.

Um die Turbogruppe unabhängig von der jeweils aktuellen Drehzahl des Hilfsgenerators drehzahlabgekoppelt anfahren zu können, umfasst die elektrische Verbindung neben einer Stromleitung zusätzlich vorteilhaft einen statischen Frequenzumrichter. Der statische Frequenzumrichter erlaubt eine gesteuerte Frequenzumrichtung der von dem Hilfsgenerator erzeugten elektrischen Leistung, bevor die elektrische Leistung dem Generator-Motor zugeführt wird.

In einer bevorzugten Ausführungsform der Erfindung umfasst der Dampferzeuger einen Wasserstoff-Speicher und einen Sauerstoff-Speicher sowie einen Brenner zur Verbrennung von Wasserstoff aus dem Wasserstoff-Speicher mit Sauerstoff aus dem Sauerstoff-Speicher. Der Wasserstoff und der Sauerstoff wird hierzu in dem Brenner zusammengeführt. Durch Wasserstoffreaktion entsteht dann in dem Brenner aus dem Wasserstoff und dem Sauerstoff Wasserdampf. Bei der Wasserstoffreaktion fällt somit kein weiteres Verbrennungsnebenprodukt an. Auch ist insbesondere kein weiterer fossiler Brennstoff, wie beispielsweise Diesel oder elektrische Energie, zur Dampferzeugung erforderlich.
Neben einem geringen Raumbedarf ist ein in dieser Weise ausgeführter Dampferzeuger auch erheblich weniger wartungsaufwändig als ein herkömmliches Dieselaggregat oder eine herkömmliche Hilfsgasturbine. Dies führt letztlich zu geringeren Wartungskosten, einer höheren Zuverlässigkeit des Dampferzeugers sowie auch insgesamt zu einer höheren Verfügbarkeit.
Ferner bietet die Verbrennung von Wasserstoff und Sauerstoff in einer Wasserstoffreaktion den Vorteil, dass das Druckniveau unter dem die Verbrennungsreaktion stattfindet und somit auch der Austrittsdruck des erzeugten Dampfes gut regelbar ist. So kann in einfacher Weise, und insbesondere ohne einen Kompressor erforderlich zu machen, dafür gesorgt werden, dass der erzeugte Dampf einen hinreichenden Überdruck aufweist, um ein für die Dampfströmung hinreichendes Druckgefälle von dem Dampferzeuger bis hin zum Austritt aus der Dampfturbine vorzusehen.

Vorzugsweise umfasst die Anfahrvorrichtung zusätzlich eine Wassereindüsungseinrichtung zur geregelten Eindüsung von zusätzlichem Wasser in die Zuführleitung. Die Wassereindüsungseinrichtung kann beispielsweise eine Vielzahl von Einzeldüsen umfassen, die in die erste Zuführleitung einmünden. Das zusätzlich eingedüste Wasser dient einerseits der Kühlung des der Dampfturbine zugeführten Dampfes. Der Dampf weist nach der Verbrennung in dem Dampferzeuger zunächst eine relativ hohe Temperatur von in der Regel etwa 1200 K - 1300 K auf. Zum Eintritt in die Dampfturbine ist üblicherweise eine Temperatur von etwa 500 K - 600 K ausreichend. Neben dem Herabkühlen des Dampfes wird durch die Eindüsung von zusätzlichem Wasser auch noch weiterer Dampf erzeugt.

Gemäß einer vorteilhaften Weiterbildung der Erfindung umfasst die Anfahrvorrichtung weiterhin eine zweite Zuführleitung zur Zuführung von aus der Dampfturbine austretendem Dampf in den Strömungspfad der Turbogruppe. Ein erstes Ende der zweiten Zuführleitung ist hierfür mit dem Austritt aus der Dampfturbine verbunden. Ein zweites Ende der zweiten Zuführleitung mündet stromab des Verdichters in den Strömungspfad der Turbogruppe ein. Der aus der Dampfturbine austretende, teilentspannte Dampf wird demzufolge über die zweite Zuführleitung in den Strömungspfad der Turbogruppe eingespeist. Im Falle eines offenen Arbeitsprozesses der Turbogruppe entspannt der eingespeiste Dampf in der Turbine bis auf Umgebungsdruck. Im Falle eines geschlossenen Arbeitsprozesses der Turbogruppe entspannt der Dampf in der Turbine bis auf den unteren Prozessdruck. Durch die in der Turbine der Turbogruppe wirksame Entspannung des eingespeisten Dampfes wird die Turbine zusätzlich angetrieben, wodurch der Anfahrvorgang in einer kürzeren Zeitdauer erfolgt.

In einer zweckmäßigen Ausgestaltung der Erfindung mündet die zweite Zuführleitung zwischen dem Austritt aus dem Verdichter und dem Eintritt in die Brennkammer in den Strömungspfad der Turbogruppe ein. Der zugeführte Dampf durchströmt somit nach dem Eintreten in den Strömungspfad zunächst die Brennkammer und danach die Turbine. Dies führt zu einer Erhöhung des Massendurchsatzes durch die Brennkammer, wodurch die Brennkammer frühzeitiger gezündet werden kann.

Alternativ oder ergänzend kann die zweite Zuführleitung zweckmäßig aber auch in die Brennkammer einmünden. Auch kann die zweite Zuführleitung zwischen dem Austritt aus der Brennkammer und dem Eintritt in die Turbine in den Strömungspfad einmünden.

Bei einer wenigstens zweistufigen Turbine mit wenigstens einer ersten Turbinenstufe und einer zweiten Turbinenstufe kann es auch zweckmäßig sein, die zweite Zuführleitung alternativ oder ergänzend auch zwischen der ersten und der zweiten Turbinenstufe in den Strömungspfad einmünden zu lassen. Der zugeführte Dampf entspannt dann über die stromab der Einmündung angeordnete Turbinenstufe bzw. über die stromab der Einmündung angeordneten Turbinenstufen.
Im Falle einer stromab der ersten Turbine angeordneten zweiten Turbine kann es auch zweckmäßig sein, die zweite Zuführleitung zwischen den beiden Turbinen in den Strömungspfad einmünden zu lassen.

Zweckmäßig ist die erste Zuführleitung und/oder die zweite Zuführleitung verschließbar ausgeführt. Zu Beginn des Anfahrvorgangs sind die Zuführleitungen verschlossen. In dem Dampferzeuger kann so zunächst ein hinreichender Druckaufbau erfolgen, bevor die betreffende Zuführleitung oder auch beide Zuführleitungen zu einem definierten Zeitpunkt geöffnet werden und der Anfahrvorgang an sich gestartet wird. Ebenso können auch beim Beenden des Anfahrvorgangs die betreffende Zuführleitung oder auch beide Zuführleitungen zu einem definierten Zeitpunkt geschlossen werden.

In einem weiteren Aspekt stellt die Erfindung ein Verfahren zum Anfahren einer Turbogruppe zur Verfügung. Die Turbogruppe des erfindungsgemäßen Verfahrens umfasst einen Verdichter, eine Brennkammer und eine Turbine, wobei Verdichter, Brennkammer und Turbine entlang eines Strömungspfades angeordnet sind. Das erfindungsgemäße Verfahren umfasst die Verfahrensschritte, unter Überdruck stehenden Dampf zu erzeugen, den Dampf unter Erzeugung elektrischer Leistung wenigstens teilzuentspannen und die Turbogruppe mittels der elektrischen Leistung elektromotorisch anzufahren.
Die Vorteile des erfindungsgemäßen Verfahrens gegenüber den aus dem Stand der Technik bekannten Verfahren entsprechen den oben mit Bezug auf die erfindungsgemäß ausgeführte Turbogruppe mit Anfahrvorrichtung getroffenen Ausführungen.

Der Ablauf des Anfahrvorgangs der Turbogruppe entspricht dann im Weiteren den aus dem Stand der Technik bekannten Anfahrvorgängen von Turbogruppen. Demzufolge wird die Turbogruppe üblicherweise auf eine Mindestdrehzahl hochgefahren, von der aus die Turbogruppe aus eigener Kraft weiter hochdrehen kann.

Gemäß einer bevorzugten Ausgestaltung des erfindungsgemäßen Verfahrens wird der Dampf durch eine Verbrennung von Wasserstoff mit Sauerstoff erzeugt. Wasserstoff und Sauerstoff werden hierzu getrennt voneinander der Verbrennung zugeleitet und reagieren in einer Wasserstoffreaktion miteinander unter Bildung von Wasserdampf. Von bedeutendem Vorteil ist, dass bei der Wasserstoffreaktion kein weiteres Verbrennungsnebenprodukt anfällt. Insbesondere ist auch kein weiterer fossiler Brennstoff zur Erzeugung von Dampf nötig.
Ferner bietet die Verbrennung von Wasserstoff und Sauerstoff in einer Wasserstoffreaktion den Vorteil, dass das Druckniveau unter dem die Verbrennungsreaktion stattfindet und somit auch der Austrittsdruck des erzeugten Dampfes gut regelbar ist. So kann in einfacher Weise, und insbesondere ohne dass hierfür ein Kompressor vorzusehen ist, dafür gesorgt werden, dass der erzeugte Dampf einen hinreichenden Überdruck aufweist, um ein für die Dampfströmung hinreichendes Druckgefälle von dem Dampferzeuger bis hin zum Austritt aus der Dampfturbine vorzusehen.

Zweckmäßig wird dem erzeugten Dampf vor der Entspannung zusätzlich Wasser zugeführt. Diese Zuführung von Wasser dient einerseits der Kühlung des erzeugten Dampfes und andererseits der Erhöhung der erzeugten Dampfmenge.

Gemäß einer vorteilhaften Weiterbildung des Verfahrens wird der Dampf nach der Teilentspannung in den Strömungspfad der Turbogruppe eingespeist. Im Falle eines offenen Arbeitsprozesses der Turbogruppe kann der Dampf nach der Einspeisung in den Strömungspfad der Turbogruppe bis auf Umgebungsdruck entspannt werden. Im Falle eines geschlossenen Arbeitsprozesses der Turbogruppe kann der Dampf nach der Einspeisung bis auf den unteren Prozessdruck entspannt werden. Durch die in der Turbine der Turbogruppe wirksame Entspannung des Dampfes wird die Turbine zusätzlich angetrieben und der Anfahrvorgang hierdurch beschleunigt.

Zweckmäßig wird der Dampf zwischen Verdichteraustritt und Brennkammereintritt und/oder in der Brennkammer und/oder zwischen Brennkammeraustritt und Turbineneintritt und/oder bei einer wenigstens zweistufig ausgeführten Turbine zwischen den Turbinenstufen dem Strömungspfad zugeführt.

Das erfindungsgemäße Verfahren eignet sich zum Anfahren jeglicher Turbogruppen, insbesondere zum Anfahren von Gas- oder Dampfturbinenanlagen oder auch von Kombianlagen.

### Kurze Beschreibung der Zeichnungen

Die Erfindung wird nachfolgend anhand eines in den Figuren illustrierten Ausführungsbeispiels näher erläutert. Es zeigen:
- Figur 1: eine aus dem Stand der Technik bekannte Turbogruppe mit Drucklufteinblasung;
- Figur 2: eine Turbogruppe mit Anfahrvorrichtung gemäß der Erfindung.

In den Figuren sind nur die für das Verständnis der Erfindung wesentlichen Elemente und Bauteile dargestellt.
Das dargestellte Ausführungsbeispiel ist rein instruktiv zu verstehen und soll einem besseren Verständnis, aber nicht einer Einschränkung des Erfindungsgegenstandes dienen.

### Wege zur Ausführung der Erfindung

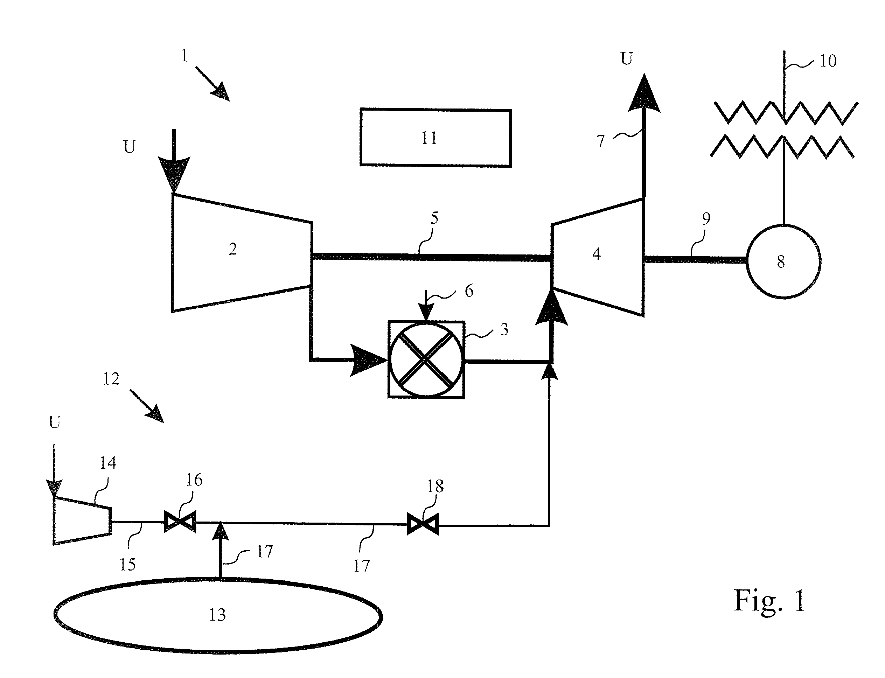

Figur 1 zeigt in einer schematischen Darstellung eine Gasturbinenanlage 1, wie sie dem Fachmann geläufig ist. Die hier als stationäre Anlage ausgeführte Gasturbinenanlage 1 dient zur Erzeugung von Strom. Die Erfindung ist aber grundsätzlich auch auf mobile Anlagen oder anderweitig eingesetzte Turbogruppen anwendbar.
Die Gasturbinenanlage 1 umfasst einen Verdichter 2, der eingangsseitig Luft aus der Umgebung U ansaugt und diese verdichtet. Der Verdichter 2 ist über eine Welle 5 mit einer Turbine 4 drehfest antriebsverbunden. In dem Gaspfad zwischen Verdichter 2 und Turbine 4 ist eine Brennkammer 3 angeordnet, die zur Feuerung über die Brennstoffzuleitung 6 mit Brennstoff beschickt wird. Nach dem Durchtritt durch die Turbine 4 entströmt das Luft-Brenngas-Gemisch über eine Abgasleitung 7 wieder in die Umgebung U. Die Turbine 4 ist über eine weitere Welle 9 mit einem Generator 8 antriebsverbunden. Die Wellen 5 und 9 können auch einteilig ausgeführt sein. Im Betrieb liefert die hier dargestellte Gasturbinenanlage 1 etwa 220 MW Leistung, die über den von der Turbine 4 angetriebenen Generator 8 in Strom umgewandelt und über eine Stromleitung und einen Transformator in ein elektrisches Netz 10 abgeführt wird. Des Weiteren umfasst die Gasturbinenanlage 1 ein Stromversorgungsaggregat 11, mit der die Gasturbinenanlage 1 speziell während der Hochlaufphase mit Strom versorgt wird.
Selbstverständlich kann die Gasturbinenanlage 1 auch mehrwellig, mit mehreren Turbinen und zwischengeordneten Brennkammern, mit mehreren Verdichtern und zwischengeordneten Kühlern und dergleichen ausgeführt sein. Diese weiteren Ausführungsformen sind dem Fachmann geläufig und stellen die Erfindung lediglich in einen dem Fachmann geläufigen Kontext, weshalb an dieser Stelle nicht weiter darauf eingegangen wird.

Um die Gasturbinenanlage 1 anfahren zu können, umfasst die in Figur 1 dargestellte Gasturbinenanlage 1 weiterhin eine Drucklufteinblasevorrichtung 12 als Anfahrvorrichtung zum Anfahren der Gasturbinenanlage. Die Drucklufteinblasevorrichtung 12 umfasst ein Reservoir 13, das von einem Kompressor 14 über die Befüllleitung 15 mit Druckluft befüllt wird. Die Befüllleitung 15 ist mittels eines in die Befüllleitung integrierten Drosselschiebers 16 verschließbar. Ferner umfasst die Drucklufteinblasevorrichtung 12 eine Verbindungsleitung 17, die ebenso mittels eines in die Verbindungsleitung 17 integrierten Drosselschiebers 18 verschließbar ist. Ein Ende der Verbindungsleitung 17 ist mit dem Reservoir 13 verbunden. Das andere Ende der Verbindungsleitung 17 mündet zwischen der Brennkammer 3 und der Turbine 4 in den Strömungspfad der Gasturbinenanlage 1. Zum Starten der Gasturbinenanlage 1 wird der Drosselschieber 18 geöffnet, so daß Druckluft aus dem Reservoir 13 über die Verbindungsleitung 17 in die Turbine 4 einströmt. Die über die Verbindungsleitung 17 in die Gasturbinenanlage eingebrachte Druckluft entspannt sodann über die Turbine 4, wodurch die Turbine 4 in Rotation versetzt wird. Über die Welle 5 wird der Verdichter 2 angetrieben, der hierdurch Luft aus der Umgebung U ansaugt und verdichtet. Ab einer gewissen Verdichterdrehzahl genügt der von dem Verdichter 2 der Brennkammer 3 zugeförderte Luftmassenstrom, um die Brennkammer 3 zünden zu können. Diese Minimaldrehzahl des Verdichters liegt in dem hier dargestellten Beispiel bei etwa 15 MW Leistungsumsatz der Gasturbinenanlage 1. Nach dem Zünden der Brennkammer 3 folgt üblicherweise eine Stabilisierungsphase, bevor die Einblasung von Druckluft in die Gasturbinenanlage beendet wird. Die Drehzahl der Anlage kann dann eigenständig durch ein Erhöhen der zugeführten Brennstoffmenge je nach Bedarf weiter gesteigert werden.

Da die zum Starten der Gasturbinenanlage 1 benötigte Druckluft nicht in ausreichender Menge zum Zeitpunkt des Startvorgangs erzeugt werden kann, muss die Druckluft bereits vor dem Starten des Einblasevorgangs in dem Reservoir 13 zur Verfügung gestellt werden. Dies erfolgt üblicherweise mittels des Kompressors 14 oder durch ein Abzweigen von Druckluft aus der Gasturbinenanlage 1 selbst. Ein solches Abzweigen von Druckluft kann natürlich nur während des Betriebs der Anlage vorgenommen werden, d.h. während des Betriebs der Anlage nur jeweils für einen späteren Startvorgang.
Die Anordnung eines zusätzlichen Kompressors 14 zum Befüllen des Reservoirs 13 hingegen verursacht hohe Kosten für die Anschaffung und den Betrieb des Kompressors 14. Auch ist ein solcher Kompressor während eines überwiegenden Anteils der Betriebsdauer der Gasturbinenanlage 1 ohne Funktion. Wird das Reservoir 13 hingegen durch Abzweigen von Druckluft während des Betriebs der Gasturbinenanlage befüllt, so muss mindestens eine Erstbefüllung des Reservoirs 13 mit Hilfe eines Zusatzkompressors erfolgen. Auch kann es beispielsweise nach einem abgebrochenen Startvorgang der Gasturbinenanlage 1 erforderlich sein, das Reservoir wieder aufzufüllen, da die noch in dem Reservoir verbliebene Druckluftmenge für einen zweiten Startvorgang nicht mehr ausreichend ist. Wie auch bei dem allerersten Startvorgang ist in diesen Fällen ein Befüllen des Reservoirs mittels eines zusätzlichen Kompressors erforderlich.
Ein weiterer sehr großer Nachteil stellt das verhältnismäßig große bauliche Volumen für das Reservoir 13 dar. Da ausreichend Druckluftmenge in dem Reservoir gespeichert sein muss, um die Gasturbine auf etwa ein Zehntel der Leistung der Gasturbine im Auslegungspunkt hochzufahren, sind die Reservoirs üblicherweise mit großen Volumina von mehreren hundert Kubikmetern vorzusehen. In der in der US 3 704 586 beschriebenen Anlage umfasst das mit 12 gekennzeichnete Reservoir 400 Kubikmeter bei einem Betriebsdruck von 36 bar. Derart große druckfeste Volumina erfordern baulich aufwändige Maßnahmen und erhöhen dadurch die Kosten für eine solche Anlage. Auch kann der für das Reservoir benötigte Bauraum nicht anderweitig genutzt werden.

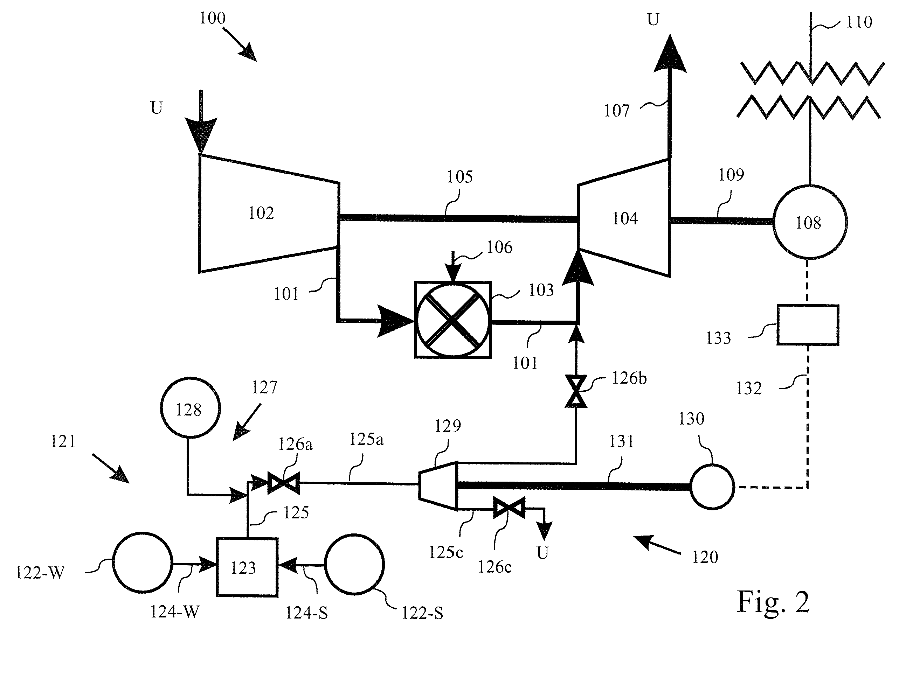

Hier setzt die Erfindung an. Figur 2 zeigt eine erfindungsgemäß ausgebildete Turbogruppe 100 mit Anfahrvorrichtung 120. Die dargestellte Turbogruppe kann beispielsweise Teil einer Energieerzeugungsanlage, wie zum Beispiel einer Gasturbinenanlage oder einer GuD-Kraftwerksanlage, sein.
Die in Figur 2 dargestellte Turbogruppe 100 umfasst einen mehrstufigen Verdichter 102, eine Brennkammer 103 mit Brennstoffzuleitung 106 und eine zweistufige Turbine 104 mitsamt Abgasleitung 107. Verdichter 102, Brennkammer 103 und Turbine 104 sind entlang des Strömungspfades 101 der Turbogruppe angeordnet. Ferner sind der Verdichter 102 und die Turbine 104 über eine Welle 105 miteinander antriebsverbunden. Die Turbogruppe umfasst des Weiteren einen Generator-Motor 108, der über eine Welle 109 mit der Turbine 104 antriebsverbunden ist. Während des Betriebs der Turbogruppe 100 erzeugt der Generator-Motor 108 Strom, der in ein externes Netz 110 eingespeist wird. Der Generator-Motor 108 kann aber auch als Elektromotor betrieben werden.

Zum Anfahren der Turbogruppe 100 ist der Turbogruppe eine Anfahrvorrichtung 120 beigeordnet. Die Anfahrvorrichtung 120 umfasst einen Dampferzeuger 121 zur Erzeugung von unter Überdruck stehendem Dampf, eine Dampfturbine 129 sowie einen Hilfsgenerator 130. Dampferzeuger 121 und Dampfturbine 129 sind über eine erste Zuführleitung 125a zur Zuleitung von in dem Dampferzeuger 121 erzeugten Dampf zu der Dampfturbine 129 miteinander verbunden. Von der Dampfturbine 129 führt zusätzlich eine zweite Zuführleitung 125b weg, die in den Strömungspfad 101 der Turbogruppe 100 einmündet. Aus der Dampfturbine 129 austretender, teilentspannter Dampf kann so mittels der zweiten Zuführleitung 125b in den Strömungspfad 101 der Turbogruppe einspeist werden. In dem in Figur 2 dargestellten Ausführungsbeispiel mündet hierzu die zweite Zuführleitung 125b zwischen dem Austritt aus der Brennkammer 103 und dem Eintritt in die Turbine 104 in den Strömungspfad 101 ein. Alternativ kann der Dampf aber auch über die Ableitung 125c in die Umgebung U abgeführt werden. Letzteres ist insbesondere dann sinnvoll, wenn das gesamte Druckgefälle des Dampfes bereits in der Dampfturbine abgebaut wurde.
In die erste Zuführleitung 125a, in die zweite Zuführleitung 125b sowie auch in die dritte Zuführleitung 125c sind hier jeweils Drosselschieber 126a, 126b und 126c integriert, die vorzugsweise von einer zentralen Regelungsvorrichtung (in Figur 2 nicht dargestellt) angesteuert werden. Während die Drosselschieber 126a und 126b im Stillstand der Turbogruppe sowie auch bei hochgefahrener Turbogruppe vollständig geschlossen sind, werden die Drosselschieber 126a und 126b zum Anfahren der Turbogruppe 100 geöffnet, um so den in dem Dampferzeuger 121 erzeugten Dampf über die Zuführleitung 125a in die Dampfturbine und von dort über die Zuführleitung 125b in den Strömungspfad 101 der Turbogruppe 100 einströmen zu lassen.

Der Hilfsgenerator 130 ist über eine Welle 131 mit der Dampfturbine 129 antriebsverbunden. Weiterhin ist der Hilfsgenerator 130 über eine elektrische Leitung 132 mit dem Generator-Motor 108 verbunden. In die elektrische Leitung 132 zwischengeschaltet ist hier zusätzlich ein statischer Frequenzumrichter 133. Im Betrieb wird der Hilfsgenerator 130 von der Dampfturbine 129 angetrieben und erzeugt hierdurch elektrische Leistung. Die maximale Leistungsabgabe des hier dargestellten Hilfsgenerators 130 beträgt 15 MW bei einer maximalen Leistung von 220 MW der Turbogruppe. Die in dem Hilfsgenerator 130 erzeugte elektrische Leistung wird mittels der elektrischen Leitung 132 von dem Hilfsgenerator 130 auf den Generator-Motor 108 übertragen. Der statische Frequenzumrichter 133 sorgt hierbei für eine Frequenzanpassung. Der während des Anfahrvorgangs der Turbogruppe als Elektromotor betriebene Generator-Motor 108 setzt die von dem Hilfsgenerator 130 erzeugte elektrische Leistung wieder in mechanische Rotation um, die über die Welle 109 auf die Turbine 104 und von dort über die Welle 105 auch auf den Verdichter 102 übertragen wird.

Der in Figur 2 dargestellte Dampferzeuger 121 umfasst einen Wasserstoff-Speicher 122-W und einen Sauerstoff-Speicher 122-S sowie einen Brenner 123 zur Verbrennung von Wasserstoff aus dem Wasserstoff-Speicher 122-W mit Sauerstoff aus dem Sauerstoff-Speicher 122-S. Der Brenner 123 ist hierzu über die Zuleitungen 124-W und 124-S mit den Speichern 122-W und 122-S verbunden. Der Wasserstoff-Speicher 122-W und der Sauerstoff-Speicher 122-S sind als Flüssiggas-Speicher ausgeführt. Wasserstoff und Sauerstoff liegen in den Speichern somit flüssig und unter Hochdruck vor. Aufgrund dessen, dass der Wasserstoff und der Sauerstoff in flüssiger Form gespeichert werden, ist für die Speicherung einer bestimmten Molmenge Wasserstoff und Sauerstoff ein erheblich geringeres Speichervolumen erforderlich, als dies erforderlich wäre, wenn dieselbe Molmenge an Druckluft oder auch gasförmigem Dampf zu speichern wäre. Zudem weist Wasser bei der Verdampfung eine hohe Expansionsrate auf.

Zum Anfahren der Turbogruppe 100 wird aus den Speichern 122-W und 122-S Wasserstoff und Sauerstoff je nach Bedarf entnommen, in den Brenner 123 eingebracht und dort in einer Wasserstoffreaktion zu Wasserdampf verbrannt. Die Regelung der Einbringung von Wasserstoff und Sauerstoff in den Brenner erfolgt mittels Drossel- und Regelungselementen, die in Figur 2 nicht dargestellt sind, die jedoch einem Fachmann geläufig sind.
Die Wasserstoffreaktion erfolgt hoch exotherm, so dass der aus dem Brenner 123 austretende Wasserdampf eine sehr hohe Temperatur von etwa 1200 K - 1300 K aufweist. Um einerseits die Temperatur des Wasserdampfes auf eine geringere Temperatur von etwa 500 K - 700 K herunterzukühlen und andererseits die Menge an bereitgestelltem Wasserdampf zusätzlich zu erhöhen, umfasst die Anfahrvorrichtung 120 ferner eine Wassereindüsungseinrichtung 127 zur geregelten Eindüsung von zusätzlichem Wasser aus einem Wasser-Vorratsbehälter 128 in die Zuführleitung 125. Mittels der Wassereindüsungseinrichtung 127 wird eine geregelte Menge an entmineralisiertem Wasser dem aus dem Brenner 123 kommenden Wasserdampf beigemischt und verdampft hierbei. Die zur Mengenregelung eingesetzte Regelungseinrichtung sowie erforderliche Drosselschieber zur Regelung der zugeführten Wassermenge sind in Figur 2 nicht dargestellt. Diese sind jedoch einem Fachmann geläufig.
Nach dem Beimischen von zusätzlichem Wasser hat der in der Zuführleitung 125 befindliche Wasserdampf eine Temperatur von etwa 500 K - 700 K.

Zum Anfahren der Turbogruppe 100 wird somit zunächst unter Überdruck stehender Wasserstoff sowie unter Überdruck stehender Sauerstoff aus den Speichern 122-W und 122-S entnommen und in den Brenner 123 eingebracht, wo der Wasserstoff mit dem Sauerstoff zu Wasserdampf verbrennt. Dem aus dem Brenner 123 kommenden Wasserdampf wird in der Zuführleitung 125a zusätzliches Wasser aus dem Vorratsbehälter 128 beigemischt und die Dampfmenge hierdurch erhöht. Der so erzeugte und unter einem Überdruck von etwa 10 bar stehende Dampf wird über die Zuführleitung 125a der Dampfturbine 129 zugeleitet und hier auf einen Austrittsdruck von etwa 5 bar teilentspannt. Durch die Teilentspannung des Dampfes wird die Dampfturbine 129 angetrieben, die wiederum über die Welle 131 den Hilfsgenerator 130 antreibt. Dieser erzeugt hierdurch elektrische Leistung, die mittels der elektrischen Leitung 132 von dem Hilfsgenerator 130 auf den Generator-Motor 108 übertragen wird. Im Anfahrzustand arbeitet der Generator-Motor 108 als Elektromotor. Mittels dem in die Leitung 132 zwischengeschalteten statischen Frequenzumrichter 133 wird die elektrische Leistung frequenzangepasst, so dass die Drehfrequenz des Generator-Motors 108 unabhängig von der Drehfrequenz des Hilfsgenerators 130 ist. Die von dem Hilfsgenerator 130 erzeugte und dem Generator-Motor 108 zugeführte elektrische Leistung wird von dem Generator-Motor 108 somit wieder in mechanische Rotation umgesetzt und diese mechanische Rotation wird über die Welle 109 auf die Turbine 104 und von dort über die Welle 105 auch auf den Verdichter 102 übertragen.
Weiterhin wird der teilentspannte Dampf nach dem Austritt aus der Dampfturbine 129 über die Zuführleitung 125b in den Strömungspfad 101 der Turbogruppe 100 eingespeist. Die in den Strömungspfad 101 eingespeiste Dampfmenge entspannt über die Turbine 104, wodurch die Turbine 104 zusätzlich noch unmittelbar angetrieben wird.

Die in Figur 2 dargestellte Turbogruppe 100 sowie das zum Anfahren der Turbogruppe 100 beschriebene Verfahren stellen nur beispielhafte Ausführungsformen der Erfindung dar, die von einem Fachmann durchaus in vielfältiger Weise modifiziert werden können, ohne den Erfindungsgedanken zu verlassen. So ist beispielsweise eine Kombination der erfindungsgemäßen Anfahrvorrichtung bzw. des erfindungsgemäßen Anfahrverfahrens mit anderen, aus dem Stand der Technik bekannten Anfahrvorrichtungen und -verfahren möglich.

### Bezugszeichenliste

- U: Umgebung

- 1: Gasturbinenanlage
- 2: Verdichter
- 3: Brennkammer
- 4: Turbine
- 5: Welle zwischen Verdichter und Turbine
- 6: Brennstoffzuleitung
- 7: Abgasleitung
- 8: Generator
- 9: Welle zwischen Turbine und Generator
- 10: Netz
- 11: Stromversorgungsaggregat
- 12: Drucklufteinblasevorrichtung
- 13: Reservoir
- 14: Kompressor
- 15: Befüllleitung
- 16: Drosselschieber
- 17: Verbindungsleitung
- 18: Drosselschieber

- 100: erfindungsgemäß ausgebildete Turbogruppe mit Anfahrvorrichtung
- 101: Strömungspfad der Turbogruppe
- 102: Verdichter
- 103: Brennkammer
- 104: Turbine
- 105: Welle zwischen Verdichter und Turbine
- 106: Brennstoffzuleitung
- 107: Abgasleitung
- 108: Generator-Motor
- 109: Welle zwischen Turbine und Generator
- 110: Netz
- 120: Anfahrvorrichtung
- 121: Dampferzeuger
- 122-W: Wasserstoff-Speicher
- 122-S: Sauerstoff-Speicher
- 123: Brenner
- 124-W, 124-S: Zuleitungen
- 125a, 125b: Zuführleitungen
- 125c: Ableitung
- 126a, 126b, 126c: Drosselschieber
- 127: Wassereindüsungseinrichtung
- 128: Wasservorratsbehälter
- 129: Dampfturbine
- 130: Hilfsgenerator
- 131: Welle
- 132: elektrische Leitung
- 133: statischer Frequenzumrichter

## Patentansprüche

1. Turbogruppe (100) mit Anfahrvorrichtung (120) zum Anfahren der Turbogruppe, wobei die Turbogruppe (100) einen Verdichter (102), eine Brennkammer (103), eine Turbine (104) und einen Generator-Motor (108) umfasst und der Verdichter (102), die Brennkammer (103) und die Turbine (104) entlang eines Strömungspfades (101) angeordnet sind und der Generator-Motor (108) mit der Turbine (104) antriebsverbunden ist,
**dadurch gekennzeichnet, dass**
die Anfahrvorrichtung (120) einen Dampferzeuger (121) zur Erzeugung von unter Überdruck stehendem Dampf, eine Dampfturbine (129) sowie einen Hilfsgenerator (130) umfasst,
wobei der Dampferzeuger (121) und die Dampfturbine (129) über eine erste Zuführleitung (125a) zur Zuführung von in dem Dampferzeuger erzeugten Dampf zu der Dampfturbine miteinander verbunden sind und
der Hilfsgenerator (130) einerseits mit der Dampfturbine (129) antriebsverbunden ist und andererseits zur Übertragung von elektrischer Leistung von dem Hilfsgenerator (130) auf den Generator-Motor (108) mit dem Generator-Motor (108) elektrisch verbunden ist.

2. Turbogruppe (100) mit Anfahrvorrichtung (120) gemäss Anspruch 1, **dadurch gekennzeichnet, dass** der Dampferzeuger (121) einen Wasserstoff-Speicher (122-W) und einen Sauerstoff-Speicher (122-S) sowie einen Brenner (123) zur Verbrennung von Wasserstoff aus dem Wasserstoff-Speicher mit Sauerstoff aus dem Sauerstoff-Speicher umfasst.

3. Turbogruppe (100) mit Anfahrvorrichtung (120) gemäss einem der vorhergehenden Ansprüche, **dadurch gekennzeichnet, dass** die Anfahrvorrichtung (120) zusätzlich eine Wassereindüsungseinrichtung (127) zur geregelten Eindüsung von zusätzlichem Wasser in die erste Zuführleitung (125a) umfasst.

4. Turbogruppe (100) mit Anfahrvorrichtung (120) gemäss einem der vorhergehenden Ansprüche, **dadurch gekennzeichnet, dass** die elektrische Verbindung zwischen dem Hilfsgenerator (130) und dem Generator-Motor (108) eine elektrische Leitung (132) und vorzugsweise einen statischen Frequenzumrichter (133) umfasst.

5. Turbogruppe (100) mit Anfahrvorrichtung (120) gemäss einem der vorhergehenden Ansprüche, **dadurch gekennzeichnet, dass** die Anfahrvorrichtung (120) weiterhin eine zweite Zuführleitung (125b) zur Zuführung von aus der Dampfturbine (129) austretendem Dampf in den Strömungspfad (101) der Turbogruppe umfasst, wobei ein erstes Ende der zweiten Zuführleitung mit der Dampfturbine (129) verbunden ist und ein zweites Ende der zweiten Zuführleitung stromab des Verdichters (102) in den Strömungspfad (101) der Turbogruppe einmündet.

6. Turbogruppe (100) mit Anfahrvorrichtung (120) gemäss einem der vorhergehenden Ansprüche, **dadurch gekennzeichnet, dass** die erste Zuführleitung (125a) und/oder die zweite Zuführleitung (125b) verschließbar ist.

7. Verfahren zum Anfahren einer Turbogruppe mit einem Verdichter, einer Brennkammer und einer Turbine, wobei Verdichter, Brennkammer und Turbine entlang eines Strömungspfades angeordnet sind, umfassend, unter Überdruck stehenden Dampf zu erzeugen, den Dampf unter Erzeugung elektrischer Leistung wenigstens teilzuentspannen und die Turbogruppe mittels der elektrischen Leistung elektromotorisch anzufahren.

8. Verfahren gemäss Anspruch 7, weiterhin umfassend, den Dampf durch Verbrennung von Wasserstoff mit Sauerstoff zu erzeugen.

9. Verfahren gemäss einem der Ansprüche 7 oder 8, weiterhin umfassend, dem Dampf vor der Entspannung zusätzlich Wasser zuzuführen.

10. Verfahren gemäss einem der Ansprüche 7 bis 9, weiterhin umfassend, den teilentspannten Dampf in den Strömungspfad der Turbogruppe zuzuführen.
